# DEMANDE DE BREVET EUROPEEN

(11) **EP 2 261 613 A1**
(43) Date de publication de la demande: **15.12.2010**
(21) Numéro de dépôt: 10305616.4
(22) Date de dépôt: 09.06.2010
(51) Int. Cl.: G01G 19/12, G01G 19/415, G01G 19/52, G01G 23/37, B65D 90/48

(54) **Dispositif de mesure du poids et des accelerations subies par le contenu d'un contenant, procédé de surveillance de ce contenu**

(30) Priorité: 10.06.2009 FR 0953848
(71) Demandeur: Quasard Investissements, 92100 Boulogne Billancourt (FR)
(72) Inventeur: Rey, Jean-Christophe, 24000, PERIGUEUX (FR)
(74) Mandataire: Fantin, Laurent

(57) **Abrégé**

L'objet de l'invention est un dispositif de pesée du contenu d'un contenant (10), solidaire ou apte à être rapporté sur un véhicule de transport par terre, air ou mer, **caractérisé en ce qu'**il comprend un plancher (14) destiné à recevoir ledit contenu et des moyens (16) de pesage interposés entre ledit plancher et le contenant.

## Description

La présente invention concerne un dispositif de mesure du poids et des accélérations subies par des marchandises dans un contenant, par exemple, un caisson du type container ou remorque de véhicule.

La présente invention couvre aussi un procédé de surveillance du contenu d'un contenant, en continu.

On sait que le transport pose des problèmes de fiabilité des marchandises transportées.

En effet, suivant la valeur et ceci d'autant plus que la marchandise a une valeur élevée ou fortement attractive, il se produit des vols, des détournements qui sont souvent constatés a posteriori, ce qui est particulièrement préjudiciable au client mais aussi au transporteur qui en a la charge.

On connaît de nombreux dispositifs de surveillance qui permettent de contrôler l'ouverture d'un contenant, des systèmes anti-effraction, des systèmes de positionnement mais par contre, aucun de ces moyens ne permet un contrôle en continu de la charge au moment du chargement, au moment du déchargement et pendant le déplacement du contenant chargé ainsi que les accélérations subies par ladite charge.

C'est l'objet du présent dispositif qui permet de surveiller en continu la charge d'un contenant et qui peut ensuite être relié à un dispositif de surveillance pour la mise en oeuvre d'un procédé de surveillance particulièrement attractif et d'une grande fiabilité dans la mesure.

Il est nécessaire que ce dispositif soit simple et que de plus, il ne représente pas une charge inerte trop importante à déplacer qui viendrait grever la charge utile du contenant.

Ce dispositif doit être interfaçable avec une centrale de surveillance et d'une grande fiabilité dans le temps.

Enfin, la précision de la mesure doit être suffisante pour permettre de déceler un ajout ou un retrait total ou partiel d'une charge.

La précision doit être adaptée pour permettre la détection d'une variation de charge entre deux mesures successives, notamment.

Les dispositifs connus de l'art antérieur ne répondaient pas à ces problématiques.

Ainsi, on connaît un dispositif de mesure du poids placé sur les moyens d'amortissement des remorques de véhicules. Ce dispositif prend en compte le poids à vide qui est variable auquel on ajoute la marchandise, travaillant ainsi par mesure de la surcharge.

Le premier problème est que ce dispositif est inapplicable à un container indépendant, même rapporté sur une remorque et reste directement lié à la remorque. De plus la remorque est liée au tracteur si bien qu'il faut l'ensemble pour effectuer une mesure digne de ce nom. La précision de plusieurs centaines de kilos qui en résulte ne trouve donc pas application en l'espèce pour déduire que deux colis ont été retirés du camion au lieu d'un seul lorsqu'il s'agit de quelques kilos ou dizaines de kilos.

Une autre solution consiste à interposer des éléments de pesage tels que des jauges de contrainte, entre le châssis et le contenant. On constate de nouveau que ceci n'est applicable qu'au véhicule concerné avec sa remorque mais pas à un container indépendant qui peut être chargé sur différents types de véhicules ou sur différents véhicules d'un même type. De plus, il faut que chaque constructeur de remorque fasse la démarche auprès des services concernés pour faire homologuer ces modifications puisqu'elles touchent à l'intégrité d'une partie roulante.

Cet agencement de l'art antérieur ne se trouve pas être satisfaisant.

C'est un avantage très important positif de voir un dispositif comme celui de la présente invention applicable à tout contenant sans modification, sans agrément et sans validation.

Le dispositif selon la présente invention est maintenant décrit selon un mode de réalisation particulier, non limitatif, en regard des dessins annexés sur lesquels les différentes figures montrent :
- figure 1 : une vue schématique illustrative d'un contenant, en l'occurrence une remorque de camion, équipé du dispositif de mesure du poids selon la présente invention,
- figure 2 : une vue schématique illustrative d'un module de mesure du poids selon la présente invention,
- figure 3 : une vue schématique illustrative d'un plateau équipé des modules de mesure du poids selon la présente invention,
- figure 4 : un mode de réalisation industriel, concret, reprenant les éléments préalablement précisés.

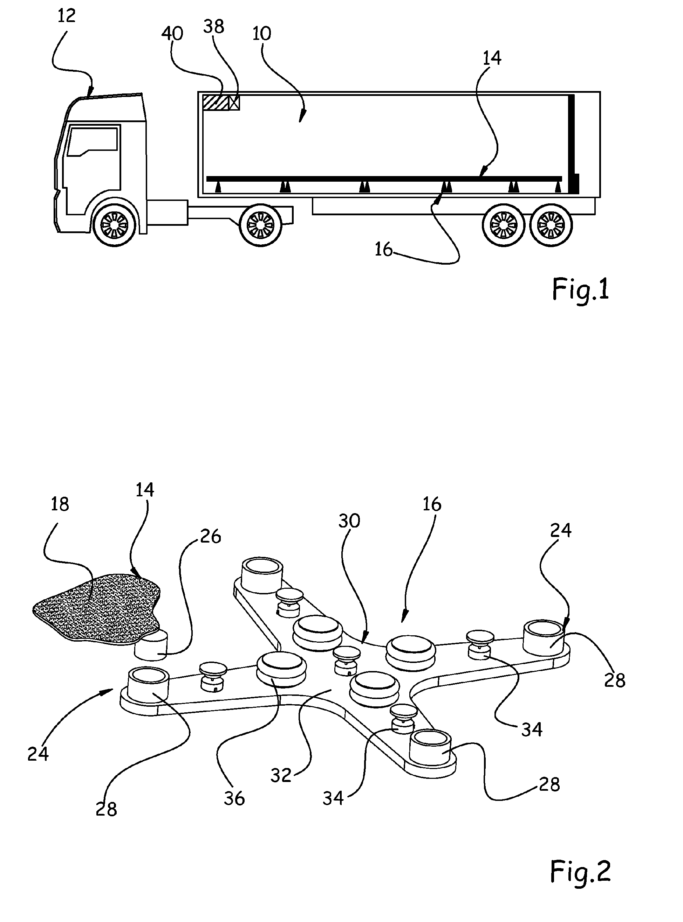

Sur la figure 1, on a représenté un contenant 10, à savoir une remorque d'un véhicule 12 semi-remorque, routier. Un tel contenant 10 peut être un container prévu pour être rapporté sur un véhicule routier, embarqué à bord d'un bateau ou d'un aéronef, le choix du contenant n'affectant pas l'application de l'invention.

Un tel contenant 10 peut être amené à recevoir des produits de valeur qui attirent les convoitises. Bien sûr le contenant entier peut être volé mais alors il existe d'autres moyens de surveillance.

Par contre, il existe d'autre sources de vols, lors du chargement ou du déchargement de ces contenants, au départ et à l'arrivée et plus encore lorsqu' il est prévu de nombreux déchargements/chargements intermédiaires.

Dans ce cas, un ou plusieurs des colis du chargement du contenant 10 peuvent être détournés de leur destination première.

On connaît ceci dans les domaines du luxe maroquinerie, parfums, ou de l'électronique avec les matériels hi-fi, ordinateurs ou téléphonie pour ne citer que ceux-là.

En effet, un colis de forte valeur n'est pas nécessairement encombrant et une subtilisation est parfaitement possible.

Le problème est que la valeur marchande de ce type colis est très élevée et la perte d'un seul colis est déjà particulièrement préjudiciable.

Le dispositif consiste à prévoir un plancher 14, installé dans le contenant, associé à des moyens 16 de pesage.

Ces moyens de pesage sont de type pesée en continu. On appelle "pesée en continu", une pesée à intervalle de temps régulier, voire des intervalles très courts. Cette pesée en continu vient en opposition avec la pesée discontinue qui consiste à peser au départ et à l'arrivée, par exemple, sans se préoccuper ni des arrêts, ni de la phase de roulage pourtant très importante.

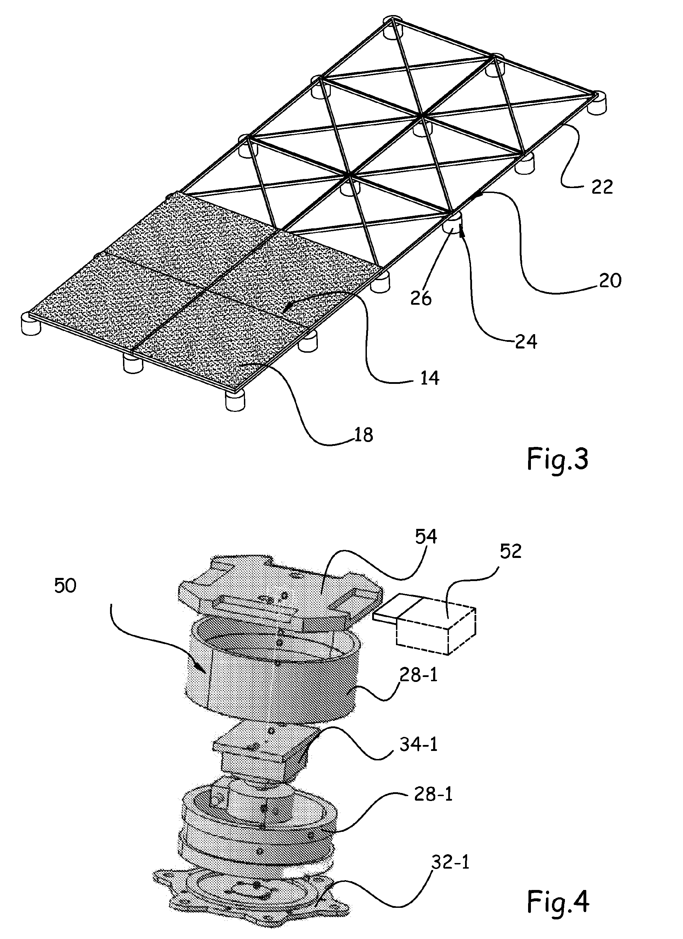

Le plancher 14 est une surface plane destinée à recevoir les marchandises. A cet effet, le plancher 14 est constitué d'une surface 18 plane continue et d'une structure 20 triangulée comme montré sur la figure 3.

Ainsi, il est prévu des modules carrés avec les deux diagonales croisées.

Cette structure 20 triangulée comporte des mailles 22 et elle est réalisée avantageusement en matériau de forte rigidité, composite à base de carbone par exemple, afin de transmettre intégralement les efforts exercés sur la surface 18 plane continue.

L'épaisseur du plancher 20 doit être limitée pour ne pas empiéter de façon préjudiciable sur le volume utile du contenant.

Ce plancher 14 comprend aussi des moyens 24 de guidage par rapport au contenant.

Ces moyens 24 de guidage comprennent des plongeurs 26, solidaires du plancher et plus particulièrement de la structure triangulée, aptes à coopérer avec des fourreaux 28 solidaires du contenant, ainsi que cela sera décrit ci-après.

Les moyens 16 de pesage comprennent des modules 30 de pesage ainsi que représenté sur la figure 2.

Chaque module 30 de pesage comporte une base 32, liée mécaniquement au contenant. Cette base est avantageusement adaptée pour être de profil conjugué de celui de la structure triangulée. A cette fin, chaque module est une croix à superposition totale avec les diagonales du carré de chaque module.

Chaque base 32 comporte les fourreaux 28, précédemment référencés, qui reçoivent les plongeurs 26 de façon à assurer un guidage parfait du plancher 14 par rapport auxdites bases 32 donc auxdits modules 30 de pesage et de fait par rapport au contenant.

Chaque base 32 comporte également des capteurs 34 de pesée disposés, pour donner un exemple, sous chacune des 4 demi diagonales de la structure 20 triangulée et au point de croisement de ces diagonales.

Chaque capteur 34 de pesée présente une partie en contact avec l'élément de la structure 20 triangulée de façon à pouvoir mesurer les déformations de celui-ci lorsqu'il reçoit une charge.

On obtient donc un maillage de capteurs 34 de pesée, disposés entre le contenant 10 et le plancher 14.

Chaque module est complété par des plots 36 amortisseurs et limiteurs de course. Ces plots évitent la détérioration des capteurs 34 de pesée, lors du transport avec les accélérations verticales et composées, liées au roulage, lorsqu'une charge n'est pas répartie de façon adaptée, en cas de choc ou encore en cas de chute sur le plancher d'un ou plusieurs colis.

Ainsi, le dispositif de pesée du contenu d'un contenant 10 comprend un plancher 14 destiné à recevoir un contenu, sous forme d'un ou plusieurs colis, ledit plancher étant installé dans ledit contenant et un maillage de capteurs 34 de pesée, aptes à mesurer la charge supportée par le plancher à raison du contenu du contenant.

Les capteurs sont nécessairement reliés à un poste 38 d'intégration des valeurs mesurées par chaque capteur pour déterminer la charge à un instant t donné.

Il est ainsi possible de connaître la valeur de la charge.

Il est à noter que la mesure s'effectue en position stable et immobile du contenant.

S'il s'agit d'un camion, cette mesure est effectuée à l'arrêt. De même s'il s'agit d'un bateau ou d'un aéronef.

Le signal concernant la valeur de la charge peut ensuite être utilisé à de nombreuses fins et notamment pour assurer un contrôle de cette charge dans le cadre d'un transport sécurisé.

Ainsi le procédé de surveillance du contenu d'un contenant 10 consiste à assurer une pesée continue c'est-à-dire à une fréquence régulière.

Ainsi, dans le cas d'un équipement 40 de sécurité associé, le procédé de contrôle du contenu d'un contenant muni d'un dispositif de pesée tel qu'il vient d'être ci-avant décrit, durant un déplacement d'un point A à un point B, consiste en la succession des étapes suivantes :
- consigner, dans l'équipement 40 de sécurité, la valeur P de la charge du contenant immobilisé, qui constitue une tare associée à ce contenant, à l'aide du dispositif ci-avant décrit, une fois le chargement effectué et validé au point A,
- assurer le déplacement du contenant du point A au point B,
- déconsigner, dans l'équipement 40 de sécurité, la valeur de la charge P du contenant au point B, pour permettre un déchargement,
- mesurer la valeur P de la charge en continu, à l'aide du dispositif ci-avant décrit, entre le point A et le point B, et
- provoquer une réaction de l'équipement 40 de sécurité lorsque la valeur de la charge mesurée M est différente de la valeur P de la charge consignée entre le point A et le point B, cette différence en valeur absolue étant supérieure à la valeur absolue de la précision de la mesure.

Ainsi, si entre le point A et le point B, le contenant 10 venait à être ouvert et au moins un colis venait à être déchargé ou chargé, modifiant la valeur P de la charge, alors l'équipement 40 de sécurité peut transmettre un signal d'alerte à un poste de contrôle par tout moyen adapté : radio et/ou téléphone et/ou mail. Cette alerte peut être couplée au positionnement GPS du contenant au moment de l'alerte, au déclenchement d'une alerte vers le chauffeur, vers les services de police et/ou de gendarmerie proches etc.

On note que le poste 38 d'intégration peut être associé à l'équipement 40 de sécurité.

Bien entendu, il convient que ces éléments, capteurs de pesée, poste d'intégration, équipement de sécurité, soient équipés de moyens de stockage de l'énergie et autonomes en énergie sur une période suffisante. Ces moyens de stockage bien connus peuvent être éventuellement rechargeables par panneaux à cellules photovoltaïques ou par connexion sur un circuit électrique du véhicule. Ce dispositif de contrôle peut être couplé avec tous les moyens anti-intrusion dont le contenant peut être doté, de la mise en service de la surveillance vidéo interne au contenant si celui-ci en est doté avec transmission immédiate etc.

Le dispositif selon la présente invention répond parfaitement à la problématique posée puisqu'il est intégrable sur les contenants rattachés ou rattachables à un véhicule de transport par terre, par mer ou par air. Le dispositif est indépendant dudit véhicule. Le dispositif ne modifie et ne requiert aucune adaptation dudit véhicule et surtout aucune adaptation susceptible de mettre en cause sa conformité routière, de navigabilité ou de fret aérien.

A titre d'information, les caractéristiques techniques du dispositif selon la présente invention peuvent être un plancher ayant moins de quinze centimètres de hauteur pour ne pas pénaliser le volume et un poids du dispositif inférieur à 5% de la charge utile du contenant.

Il est possible de prévoir un plancher modulaire afin de pouvoir répondre à toutes les contraintes des contenants, sans pour autant réaliser un équipement spécifique pour chaque type de contenant.

On constate aussi que la multiplicité des capteurs, répartis suivant un maillage sur le plancher du contenant, permet de localiser la charge dans le contenant et la répartition sur le plancher.

De plus, si le véhicule est incliné, la précision et la valeur de la mesure du poids du contenu n'en sont pas affectés grâce à cette répartition des capteurs.

Sur la figure 4, on a représenté un agencement industriel qui reprend strictement les mêmes caractéristiques que sur le mode schématique qui vient d'être indiqué et décrit en regard des figures 1 à 3.

Pour la suite, les références identiques portent les mêmes références avec -1 associé.

Cet agencement a regroupé les différents composants dans une même platine 50 intégrée de pesage, destinée à être positionnée à l'intersection d'au moins deux poutres 52 constituant les mailles 22-1 de la structure 20-1 triangulée.

Cette platine 50 intégrée de pesage comporte un socle 32-1 solidaire du contenant 10, un fourreau 28-1 et un plongeur 26-1, le montage de ces moyens 24-1 de guidage étant inversé dans le sens où le plongeur 26-1 est fixe, solidaire de la base et le fourreau 28-1 est mobile, solidaire de la structure 20-1 triangulée.

Le fourreau supporte un connecteur 54 destiné à recevoir les poutres 52.

Le capteur 34-1 de pesée est interposé entre ce connecteur 54 et la base 32-1, donc directement entre le plancher 14-1 et le contenant 10.

Le capteur est intégré dans le sens où il se trouve monté de façon coaxiale aux moyens 24-1 de guidage.

Les plots 36 amortisseurs peuvent être supprimés dans cet agencement car les courses sont supprimées car il s'agit de mesure de déformation de jauges de contraintes.

A l'arrêt, le capteur 34-1 assure une mesure adaptée de la charge, comme précédemment.

Il vient d'être décrit un mode de mesure de la charge mais il est aussi possible de mesurer des accélérations. En effet, il est important de savoir si une charge fragile a été exposée à des accélérations positives ou négatives susceptibles d'avoir provoqué la dégradation de ladite charge.

Ces mesures peuvent être réalisées lors de l'arrêt du contenant mais elles trouvent surtout un intérêt durant le roulage.

Dans le cas présent, le dispositif de pesée en continu est couplé avec des moyens connus de mesure du temps pour calculer les accélérations à l'aide d'un logiciel adapté.

Ces mesures sont effectuées en continu avec préférentiellement un enregistrement des seules phases critiques pour ne pas surcharger la capacité mémoire. Ainsi, une valeur de consigne est définie et dès qu'elle est dépassée, l'enregistrement des quelques secondes ou minutes avant et après le dépassement est conservé.

Il est alors possible de prévoir une alerte et d'agir en fonction de la situation.

Si le produit est un produit dangereux comme certains produits chimiques ou si le produit est fragile, le destinataire et/ou le responsable du transport pourront s'assurer à tout moment jusqu'au déchargement de l'état de la charge suite à cette alerte.

De plus, comme il est prévu un suivi de la position par GPS, alors il est aussi possible de déterminer en quel lieu s'est produite l'accélération hors valeur de consigne.

## Revendications

1. Dispositif de pesée du contenu d'un contenant (10), solidaire ou apte à être rapporté sur un véhicule de transport par terre, air ou mer, **caractérisé en ce qu'**il comprend un plancher (14) destiné à recevoir ledit contenu et au moins des moyens (16) de pesage interposés entre ledit plancher (14) et ledit contenant (10).

2. Dispositif de pesée du contenu d'un contenant (10) selon la revendication 1, **caractérisé en ce qu'**il comprend des moyens (24) de guidage du plancher (14) par rapport au contenant (10).

3. Dispositif de pesée du contenu d'un contenant (10) selon la revendication 2, **caractérisé en ce que** les moyens de guidage comprennent des plongeurs (26), solidaires du plancher (14), aptes à coopérer avec des fourreaux (28) solidaires du contenant (10).

4. Dispositif de pesée du contenu d'un contenant (10) selon l'une quelconque des revendications précédentes, **caractérisé en ce que** le plancher (14) est constitué d'une surface (18) plane continue et d'une structure (20) triangulée constituant des mailles (22).

5. Dispositif de pesée du contenu d'un contenant (10) selon la revendication 4, **caractérisé en ce que** la structure (20) triangulée est modulaire et réalisée avantageusement en matériau composite à base de carbone, de forte rigidité.

6. Dispositif de pesée du contenu d'un contenant (10) selon l'une quelconque des revendications précédentes, **caractérisé en ce que** les moyens (16) de pesage comprennent des modules (30) de pesage comprenant une base (32), liée mécaniquement au contenant, ainsi que des capteurs (34) de pesée.

7. Dispositif de pesée du contenu d'un contenant (10) selon la revendication 4 ou 6 et 5 ou 6, **caractérisé en ce que** les capteurs (34) de pesée sont interposés entre la base (32) et le plancher (14).

8. Dispositif de pesée du contenu d'un contenant (10) selon la revendication 7, **caractérisé en ce que** les moyens (24) de guidage du plancher (14) par rapport au contenant (10) et les capteurs (34) de pesée sont coaxiaux et intégrés entre eux.

9. Dispositif de pesée du contenu d'un contenant (10) selon l'une quelconque des revendications précédentes, **caractérisé en ce que** les moyens (16) de pesage comprennent des plots (36) amortisseurs et limiteurs de course.

10. Dispositif de pesée du contenu d'un contenant (10) selon l'une quelconque des revendications 6, 7 ou 8, **caractérisé en ce qu'**il comprend un poste (38) d'intégration des valeurs mesurées par chaque capteur (34) de pesée pour déterminer la charge à un instant t donné.

11. Dispositif de pesée du contenu d'un contenant (10) selon l'une quelconque des revendications précédentes, **caractérisé en ce qu'**il comprend des moyens de mesure du temps de façon à déterminer les accélérations positives ou négatives subies par ledit contenu.

12. Procédé de contrôle du contenu d'un contenant équipé d'un dispositif de pesée selon l'une des revendications 1 à 11 et d'un équipement (40) de sécurité associé, durant un déplacement d'un point A à un point B, **caractérisé en ce qu'**il consiste à réaliser la succession des étapes suivantes :
- consigner, dans l'équipement (40) de sécurité, la valeur P de la charge du contenant immobilisé, mesurée à l'aide dudit dispositif de pesée, une fois le chargement effectué et validé au point A,
- assurer le déplacement du contenant du point A au point B,
- déconsigner, dans l'équipement (40) de sécurité, la valeur de la charge P du contenant une fois le contenant immobilisé au point B, pour permettre un déchargement,
- mesurer la valeur P de la charge en continu, à l'aide dudit dispositif de pesée, entre le point A et le point B, et
- provoquer une réaction de l'équipement (40) de sécurité lorsque la valeur de la charge mesurée M est différente de la valeur P de la charge consignée entre le point A et le point B, cette différence en valeur absolue étant supérieure à la valeur absolue de la précision de la mesure.

13. Procédé de contrôle du contenu d'un contenant selon la revendication 12, **caractérisé en ce que** l'on mesure en continu l'accélération subie par le contenu du contenant.

14. Procédé de contrôle du contenu d'un contenant selon la revendication 13, **caractérisé en ce que** l'on enregistre les valeurs d'accélérations mesurées qui ont dépassé une valeur de consigne.
